# EUROPÄISCHE PATENTSCHRIFT

(11) **EP 4 127 767 B1**
(45) Veröffentlichungstag und Bekanntmachung des Hinweises auf die Patenterteilung: **03.04.2024**
(21) Anmeldenummer: 21715200.8
(22) Anmeldetag: 23.03.2021
(51) Int. Cl.: G01S 7/48, G01S 7/4861, G01S 7/4865, G01S 7/487, G01S 17/931

(54) **OBJEKTERKENNUNG DURCH EIN AKTIVES OPTISCHES SENSORSYSTEM**
OBJECT RECOGNITION BY AN ACTIVE OPTICAL SENSOR SYSTEM
RECONNAISSANCE D'OBJETS PAR UN SYSTÈME DE CAPTEUR OPTIQUE ACTIF

(30) Priorität: 27.03.2020 DE 102020108474
(43) Veröffentlichungstag der Anmeldung: 08.02.2023
(73) Patentinhaber: Valeo Schalter und Sensoren GmbH, 74321 Bietigheim-Bissingen (DE)
(72) Erfinder: FERNANDEZ, Sergio, 74321 Bietigheim-Bissingen (DE); GUO, Shuyun, 74321 Bietigheim-Bissingen (DE); MUENZENMAIER, Albrecht, 74321 Bietigheim-Bissingen (DE); REICHERT, Andreas, 74321 Bietigheim-Bissingen (DE)
(74) Vertreter: Pothmann, Karsten
(86) Internationale Anmeldenummer: PCT/EP2021/057349
(87) Internationale Veröffentlichungsnummer: WO 2021/191179

(56) Entgegenhaltungen:
- EP-A1- 3 588 139
- EP-B1- 1 557 694
- DE-A1-102009 057 104
- US-A1- 2004 257 556

## Beschreibung

Die vorliegende Erfindung betrifft ein Verfahren zur Objekterkennung durch ein aktives optisches Sensorsystem, wobei mittels einer Detektoreinheit des Sensorsystems von einem Objekt in einer Umgebung des Sensorsystems reflektiertes Licht erfasst wird und basierend auf dem erfassten Licht ein Sensorsignal erzeugt wird und mittels einer Recheneinheit eine erste Pulsweite eines Signalpulses des Sensorsignals bestimmt wird, wobei die erste Pulsweite durch einen vorgegebenen ersten Grenzwert für eine Amplitude des Sensorsignals festgelegt ist. Darüber hinaus betrifft die Erfindung ein Verfahren zur wenigstens teilweise automatischen Steuerung eines Kraftfahrzeugs, ein aktives optisches Sensorsystem, ein elektronisches Fahrzeugführungssystem für ein Kraftfahrzeug sowie Computerprogrammprodukte.

Aktive optische Sensorsysteme, wie beispielsweise Lidarsysteme, können an Kraftfahrzeugen montiert werden, um vielfältige Funktionen elektronischer Fahrzeugführungssysteme oder Fahrerassistenzsysteme zu realisieren. Diese Funktionen beinhalten Abstandsmessungen, Abstandsregelalgorithmen, Spurhalteassistenten, Objektverfolgungsfunktionen, Objekterkennungsfunktionen, Objektklassifizierungsfunktionen und so weiter.

Das detektierte Licht führt dabei zu einem analogen Signalpuls mit einem zeitlichen Verlauf, der die Intensität des detektierten Lichts widergibt. Um diese Information in einer diskreten Weise darzustellen, kann der Signalpuls beispielsweise durch eine bestimmte Pulsweite beschrieben werden, die durch diejenige Zeit definiert ist, der der Puls oberhalb eines bestimmten Grenzwerts liegt. Ein Nachteil dabei ist, dass die Form des Signalpulses nicht berücksichtigt wird. Ein vergleichsweise flacher und breiter Puls wird gegebenenfalls genauso behandelt und verarbeitet wie ein vergleichsweise steiler Puls, der die gleiche Pulsweite aufweist.

Dies kann zur fehlerhaften Klassifizierung von Objekten führen beziehungsweise dazu, dass eine Unterscheidung verschiedener Objektklassen basierend auf den entsprechenden Sensordaten nicht zuverlässig möglich ist. Beispielsweise kann es sein, dass solche Methoden nicht zuverlässig zwischen Reflexionen von einer Fahrbahnoberfläche beziehungsweise einer Fahrbahnmarkierung einerseits und einem sonstigen dreidimensionalen Objekt mit geringer Ausdehnung unterscheiden können. Im Dokument EP 1 557 694 B1 wird ein Verfahren zur Klassifizierung von Objekten beschrieben. Dabei wird die Umgebung eines Kraftfahrzeugs mit einem Laserscanner abgetastet und die Echopulsbreite des empfangenen reflektierten Lichtpulses wird ausgewertet. Es wird ein Schwellwert definiert, den der Lichtpuls überschreiten muss und der zeitliche Abstand zwischen Überschreiten des Schwellwerts bis zum darauffolgenden Unterschreiten des Schwellwerts wird als Echopulsbreite des Lichtpulses definiert. Optoelektronische Sensorsysteme sind auch aus US 2004/0257556 A1, EP 3 588 139 A1 und DE 10 2009 057 104 A1 bekannt.

Vor diesem Hintergrund ist es eine Aufgabe der vorliegenden Erfindung, ein verbessertes Konzept zur Objekterkennung durch ein aktives optisches Sensorsystem anzugeben, das eine höhere Genauigkeit oder Zuverlässigkeit bei der Bestimmung von Objekteigenschaften und/oder bei der Klassifizierung von Objekten ermöglicht. Die Erfindung wird durch die unabhängigen Ansprüche definiert.

Das verbesserte Konzept beruht auf der Idee, eine erste und eine zweite Pulsweite eines Signalpulses eines Sensorsignals zu bestimmen, wobei die Pulsweiten durch unterschiedliche Grenzwerte definiert sind. Wenigstens eine Eigenschaft des Objekts wird abhängig von beiden Pulsweiten bestimmt.

Gemäß dem verbesserten Konzept wird ein Verfahren zur Objekterkennung durch ein aktives optisches Sensorsystem, insbesondere ein aktives optisches Sensorsystem eines Kraftfahrzeugs, angegeben. Mittels einer Detektoreinheit des Sensorsystems wird von einem Objekt in einer Umgebung des Sensorsystems reflektiertes Licht erfasst und basierend auf dem erfassten Licht wird mittels der Detektoreinheit ein Sensorsignal erzeugt. Mittels einer Recheneinheit, insbesondere des Sensorsystems oder des Kraftfahrzeugs, wird eine erste Pulsweite eines Signalpulses des Sensorsignals bestimmt, wobei die erste Pulsweite durch einen vorgegebenen ersten Grenzwert für eine Amplitude des Sensorsignals festgelegt ist. Mittels der Recheneinheit wird eine zweite Pulsweite des Signalpulses bestimmt, wobei die zweite Pulsweite durch einen vorgegebenen zweiten Grenzwert, der verschieden ist von dem ersten Grenzwert, für die Amplitude des Sensorsignals festgelegt ist. Mittels der Recheneinheit wird wenigstens eine Eigenschaft des Objekts abhängig von der ersten Pulsweite und abhängig von der zweiten Pulsweite bestimmt.

Hier und im Folgenden kann ein aktives optisches Sensorsystem dadurch als solches definiert sein, dass es eine Emittereinheit mit einer Lichtquelle aufweist, insbesondere zum Aussenden des Lichts, beispielsweise in Form von Lichtpulsen. Die Lichtquelle kann insbesondere als Laser ausgestaltet sein. Des Weiteren weist ein aktives Sensorsystem die Detektoreinheit mit mindestens einem optischen Detektor auf, insbesondere zum Erfassen von Licht oder von Lichtpulsen, insbesondere reflektierter Anteile des ausgesendeten Lichts.

Hier und im Folgenden kann der Begriff "Licht" derart verstanden werden, dass davon elektromagnetische Wellen im sichtbaren Bereich, im Infrarotbereich und/oder im ultravioletten Bereich umfasst sind. Dementsprechend kann auch der Begriff "optisch" derart verstanden werden, dass er sich auf Licht nach diesem Verständnis bezieht.

Das Licht, welches von dem aktiven optischen Sensorsystem ausgesendet wird, kann insbesondere infrarotes Licht, beispielsweise mit einer Wellenlänge von 905 nm, ungefähr 905 nm, 1.200 nm oder ungefähr 1.200 nm beinhalten. Diese Wellenlängenangaben können sich dabei jeweils auf einen Wellenlängenbereich mit einer breiteren Verteilung beziehen, wie sie für die entsprechende Lichtquelle typisch ist.

Im vorliegenden Fall des aktiven optischen Sensorsystems kann es sich bei der Lichtquelle beispielsweise um eine Laserlichtquelle handeln. Die genannten Wellenlängen können, im Rahmen üblicher Toleranzen, beispielsweise Peakwellenlängen des Laserspektrums entsprechen.

Insbesondere wird mittels einer Emittereinheit des Sensorsystems Licht in Richtung des Objekts emittiert und bei dem reflektierten erfassten Licht handelt es sich um von dem Objekt reflektierte Anteile des emittierten Lichts.

Bei dem Sensorsignal handelt es sich insbesondere um ein analoges zeitabhängiges Signal, das eine zur detektierten Strahlungsleistung oder -intensität äquivalente Größe als Funktion der Zeit darstellt. Beispielsweise kann das Sensorsignal einem Detektorstrom eines optischen Detektors der Detektoreinheit als Funktion der Zeit entsprechen, insbesondere wenn der Detektor eine Photodiode, beispielsweise eine Lawinenphotodiode (englisch: "Avalanche Photodiode"), APD, beinhaltet.

Bei dem Signalpuls handelt es sich insbesondere um einen Teil des Sensorsignals, also um das Sensorsignal während eines bestimmten Zeitabschnitts. Innerhalb dieses Zeitabschnitts wird ein minimaler Schwellwert für die Amplitude des Sensorsignals überschritten und danach wieder unterschritten, insbesondere genau einmal überschritten und danach genau einmal unterschritten. Der minimale Schwellwert kann dabei gleich einem der Grenzwerte sein oder kleiner als der erste und der zweite Grenzwert sein.

Durch Definition eines Grenzwerts für die Amplitude des Sensorsignals ist eine Pulsweite entsprechend dadurch festgelegt, dass die Pulsweite demjenigen Zeitintervall entspricht, während dem die Amplitude des Sensorsignals größer ist als der entsprechende Grenzwert.

Entsprechend einer solchen Definition können die erste Pulsweite und/oder die zweite Pulsweite auch gleich Null sein, insbesondere wenn die maximale Amplitude des Sensorsignals während des Signalpulses stets kleiner ist als der entsprechende Grenzwert.

Durch die Berücksichtigung zweier verschiedener Pulsweiten definiert durch zwei verschiedene Grenzwerte wird die Pulsform des Signalpulses gemäß dem verbesserten Konzept zu einem gewissen Grad berücksichtigt. Dies stellt eine zusätzliche Information für die Bestimmung der Eigenschaft des Objekts beziehungsweise zur Klassifizierung des Objekts dar. Dadurch kann insbesondere eine höhere Genauigkeit und/oder eine verbesserte Zuverlässigkeit bei der Bestimmung der Eigenschaft des Objekts beziehungsweise bei der Objektklassifizierung erzielt werden.

Gemäß zumindest einer Ausführungsform des Verfahrens nach dem verbesserten Konzept ist der erste Grenzwert kleiner als der zweite Grenzwert.

Gemäß zumindest einer Ausführungsform ist das aktive optische Sensorsystem als Lidarsystem ausgestaltet.

Gemäß zumindest einer Ausführungsform handelt es sich bei dem Sensorsystem um das Sensorsystem eines Kraftfahrzeugs und das Objekt befindet sich in einer Umgebung des Kraftfahrzeugs.

Erfindungsgemäß wird die Eigenschaft des Objekts mittels der Recheneinheit abhängig von einer Differenz zwischen der ersten Pulsweite und der zweiten Pulsweite bestimmt.

Anhand der Differenz lässt sich auf die Pulsform zurückschließen. Beispielsweise lässt sich bestimmen, ob es sich um einen vergleichsweise steilen oder flachen Puls handelt. Je steiler der Puls ist, desto geringer ist beispielsweise die Differenz zwischen den beiden Pulsweiten.

Diese Information kann dann zur zuverlässigeren Unterscheidung verschiedener Objekte im Rahmen einer Objektklassifizierung herangezogen werden und/oder zur zuverlässigeren Bestimmung der Eigenschaft des Objekts. Eine Klasse oder ein Typ des Objekts kann dabei als Eigenschaft des Objekts aufgefasst werden.

Gemäß zumindest einer Ausführungsform wird die Eigenschaft des Objekts mittels der Recheneinheit abhängig von einem Verhältnis der ersten Pulsweite zu der zweiten Pulsweite bestimmt.

Mit anderen Worten wird mittels der Recheneinheit ein Quotient der Pulsweiten gebildet und die Eigenschaft wird abhängig von dem Quotienten bestimmt.

Wie auch die Differenz kann das Verhältnis dazu herangezogen werden, die Pulsform, insbesondere die Steilheit des Pulses, zu quantifizieren. Das Verhältnis ist dabei jedoch unabhängig von den Absolutwerten der Pulsweiten.

Je nach zu bestimmender Eigenschaft oder je nach Art des Objekts kann die Differenz oder das Verhältnis besser zur Bestimmung der Eigenschaft oder zur Klassifizierung geeignet sein.

Gemäß zumindest einer Ausführungsform enthält die Eigenschaft des Objekts eine Reflektivität des Objekts.

Eine höhere Reflektivität des Objekts führt tendenziell zu einer höheren Energie des reflektierten Lichts und dementsprechend zu breiteren Signalpulsen und entsprechend zu einer größeren Differenz zwischen den Pulsweiten, insbesondere, wenn der Signalpuls einen Sättigungsgrenzwert der Detektoreinheit beziehungsweise eines optischen Detektors der Detektoreinheit überschreitet.

Da die Reflektivität Rückschlüsse auf die Art des Objekts, beispielsweise dessen Oberflächenbeschaffenheit oder dergleichen, zulässt, können damit zuverlässigere Unterscheidungen zwischen verschiedenen Objekten getroffen werden. Beispielsweise können Fahrbahnmarkierungen anhand der Reflektivität zuverlässig von sonstigen Bereichen der Fahrbahnoberfläche unterschieden werden. Auch Verkehrsschilder, die in der Regel eine hohe Reflektivität aufweisen, Pflanzen, die in der Regel eine niedrige Reflektivität aufweisen, und so weiter können anhand der Reflektivität entsprechend klassifiziert werden.

Gemäß zumindest einer Ausführungsform enthält die wenigstens eine Eigenschaft des Objekts eine Ausdehnung des Objekts in einer radialen Richtung bezüglich des Sensorsystems oder bezüglich der Detektoreinheit.

Jedes Sensorsignal kann beispielsweise einer bestimmten Einfallsrichtung des erfassten Lichts zugeordnet werden. Die radiale Richtung entspricht dann beispielsweise dieser Einfallsrichtung des reflektierten Lichts.

Je kleiner die Ausdehnung, desto geringer ist beispielsweise die Differenz zwischen den beiden Pulsweiten.

Je nach Ausgestaltungsform des Sensorsystems kann die Einfallsrichtung des Lichts durch unterschiedliche Parameter festgelegt sein. Beispielsweise bei Sensorsystemen mit einem rotierenden Spiegel, um das einfallende Licht auf den entsprechenden Detektor zu lenken, kann die Spiegelstellung zur Bestimmung der Einfallsrichtung innerhalb einer bestimmten Ebene herangezogen werden und eine Position des entsprechenden Detektors senkrecht zu dieser Ebene kann die Einfallsrichtung senkrecht dazu definieren.

Indem die Ausdehnung des Objekts in der radialen Richtung bestimmt wird, oder mit anderen Worten indem bestimmt wird, aus welchem radialen Bereich die entsprechenden Reflexionen stammen, können ebenfalls Rückschlüsse über die Art des Objekts gezogen werden. So können beispielsweise Fahrbahnmarkierungen typischerweise eine relativ große Ausdehnung in radialer Richtung aufweisen, während kleine Objekte, die sich auf der Oberfläche der Fahrbahn befinden, eine kleinere Ausdehnung aufweisen. Dadurch kann die Unterscheidung zwischen Fahrbahnmarkierungen und solchen kleinen Objekten zuverlässiger erfolgen.

Gemäß zumindest einer Ausführungsform wird mittels der Recheneinheit abhängig von der ersten und der zweiten Pulsweite und/oder abhängig von der Eigenschaft des Objekts eine Klassifizierung des Objekts durchgeführt.

Insbesondere wird dem Objekt abhängig von der Eigenschaft und/oder abhängig von den Pulsweiten eine vordefinierte Klasse zugeordnet.

Die Information betreffend die Klasse oder mit anderen Worten ein Ergebnis der Klassifizierung kann dann für weitergehende Funktionalitäten beispielsweise zur Steuerung des Kraftfahrzeugs verwendet werden.

Gemäß zumindest einer Ausführungsform wird mittels der Recheneinheit basierend auf der ersten und basierend auf der zweiten Pulsweite und/oder basierend auf der Eigenschaft des Objekts festgestellt, ob es sich bei dem Objekt um einen Teil der Fahrbahn für ein Kraftfahrzeug handelt oder ob es sich bei dem Objekt um eine Fahrbahnmarkierung auf der Fahrbahn handelt.

In solchen Ausführungsformen enthält das Kraftfahrzeug insbesondere das aktive optische Sensorsystem.

Die Feststellung, ob es sich bei dem Objekt um einen Teil der Fahrbahn oder die Fahrbahnmarkierung handelt, kann als Teil der Klassifizierung verstanden werden oder entspricht der Klassifizierung des Objekts.

Indem festgestellt wird, ob es sich bei dem Objekt um den Teil der Fahrbahn oder um die Fahrbahnmarkierung handelt oder nicht, können diese von sonstigen kleinen Objekten in Bodennähe unterschieden werden, die gegebenenfalls für die Steuerung des Kraftfahrzeugs von anderer Bedeutung sind.

Gemäß zumindest einer Ausführungsform wird mittels der Recheneinheit wenigstens eine weitere Pulsweite des Signalpulses bestimmt, wobei jede weitere Pulsweite der wenigstens einen weiteren Pulsweite durch einen zugehörigen vorgegebenen weiteren Grenzwert für die Amplitude des Sensorsignals festgelegt ist. Mittels der Recheneinheit wird die wenigstens eine Eigenschaft des Objekts abhängig von der ersten Pulsweite und von der zweiten Pulsweite und von der wenigstens einen weiteren Pulsweite bestimmt.

Die wenigstens eine weitere Pulsweite ist dabei insbesondere kleiner als die zweite Pulsweite und insbesondere größer als die erste Pulsweite.

Indem die weiteren Pulsweiten entsprechend der weiteren Grenzwerte zwischen dem ersten und dem zweiten Grenzwert berücksichtigt werden, können die Pulsformen der Signalpulse mit noch höherer Genauigkeit und Zuverlässigkeit abgeschätzt werden, was in der Konsequenz zu einer weiteren Erhöhung der Genauigkeit und Zuverlässigkeit der Bestimmung der Eigenschaft des Objekts beziehungsweise der Objektklassifizierung führt.

Gemäß zumindest einer Ausführungsform ist der zweite Grenzwert größer als der erste Grenzwert und der erste Grenzwert ist größer als ein vorgegebenes Rauschniveau oder ein entsprechender Kennwert für das Rauschniveau der Detektoreinheit.

Dadurch kann mit Vorteil verhindert werden, dass Signalrauschen falsch interpretiert wird. Die Zuverlässigkeit des Verfahrens wird dadurch weiter erhöht.

Gemäß zumindest einer Ausführungsform beinhaltet das Verfahren das Bestimmen des vorgegebenen Rauschniveaus basierend auf Testmessungen.

Gemäß zumindest einer Ausführungsform ist der zweite Grenzwert größer als der erste Grenzwert und der zweite Grenzwert ist größer als ein vorgegebener Sättigungsgrenzwert der Detektoreinheit.

Der Sättigungsgrenzwert kann beispielsweise einem maximalen Detektorstrom entsprechen, sodass das Sensorsignal bei dem Sättigungsgrenzwert abgeschnitten wird, unabhängig von einer gegebenenfalls höheren Intensität des einfallenden Lichts.

Oberhalb des Sättigungsgrenzwerts ist daher eine Pulsweite nicht aussagekräftig beziehungsweise identisch Null.

Gemäß zumindest einer Ausführungsform wird der Sättigungsgrenzwert in dem Verfahren durch weitere Testmessungen vorab bestimmt.

Gemäß dem verbesserten Konzept wird auch ein Verfahren zur wenigstens teilweisen automatischen Steuerung eines Kraftfahrzeugs angegeben. Wenigstens eine Eigenschaft eines Objekts in einer Umgebung des Kraftfahrzeugs wird mittels eines Verfahrens zur Objekterkennung gemäß dem verbesserten Konzept bestimmt. Das Kraftfahrzeug wird abhängig von der wenigstens einen Eigenschaft des Objekts, insbesondere abhängig von einem Ergebnis der Klassifizierung des Objekts, wenigstens teilweise automatisch gesteuert.

Die wenigstens teilweise automatische Steuerung des Kraftfahrzeugs erfolgt dabei beispielsweise mittels eines elektronischen Fahrzeugführungssystems des Kraftfahrzeugs. Das Fahrzeugführungssystem enthält dabei ein Steuergerät und gegebenenfalls weitere Sensorsysteme und gegebenenfalls Aktuatoren.

Insbesondere kann das Fahrzeugführungssystem ein aktives optisches Sensorsystem wie beschrieben oder die Recheneinheit des aktiven optischen Sensorsystems beinhalten.

Unter einem elektronischen Fahrzeugführungssystem kann hier und im Folgenden ein elektronisches System verstanden werden, das dazu eingerichtet ist, das Kraftfahrzeug vollautomatisch oder vollautonom zu führen oder zu steuern, insbesondere ohne dass ein Eingriff in eine Steuerung durch einen Fahrer erforderlich ist. Das Kraftfahrzeug beziehungsweise das elektronische Fahrzeugführungssystem führt dabei gegebenenfalls erforderliche Lenk-, Brems- und/oder Beschleunigungsmanöver selbsttätig und vollautomatisch durch. Insbesondere kann das elektronische Fahrzeugführungssystem zur Implementierung eines vollautomatischen oder vollautonomen Fahrmodus des Kraftfahrzeugs nach Stufe 5 der Klassifizierung gemäß SAE J3016 dienen. Unter einem elektronischen Fahrzeugführungssystem kann auch ein Fahrerassistenzsystem (englisch: "advanced driver assistance system", ADAS) verstanden werden, welches den Fahrer bei einer teilweise automatisierten oder teilautonomen Fahrt des Kraftfahrzeugs unterstützt. Insbesondere kann das elektronische Fahrzeugführungssystem zur Implementierung eines teilweise automatisierten oder teilautonomen Fahrmodus des Kraftfahrzeugs nach einer der Stufen 1 bis 4 gemäß der SAE J3016-Klassifizierung dienen. Hier und im Folgenden bezieht sich "SAE J3016" auf die entsprechende Norm in der Version vom Juni 2018.

Das wenigstens teilweise automatische Steuern, welches auch als wenigstens teilweise automatische Fahrzeugführung bezeichnet werden kann, kann es daher beinhalten, das Kraftfahrzeug gemäß eines vollautomatischen oder vollautonomen Fahrmodus der Stufe 5 nach SAE J3016 zu führen. Die wenigstens teilweise automatische Fahrzeugführung kann auch beinhalten, das Kraftfahrzeug gemäß eines teilweise automatisierten oder teilautonomen Fahrmodus nach einer der Stufen 1 bis 4 nach SAE J3016 zu führen.

Gemäß zumindest einer Ausführungsform des Verfahrens zur wenigstens teilweise automatischen Steuerung des Kraftfahrzeugs nach dem verbesserten Konzept enthält das Verfahren zur Objekterkennung nach dem verbesserten Konzept die Durchführung der Klassifizierung des Objekts abhängig von der ersten und der zweiten Pulsweite. Das Kraftfahrzeug wird abhängig von einem Ergebnis der Klassifizierung wenigstens teilweise automatisch gesteuert.

Gemäß dem verbesserten Konzept wird auch ein aktives optisches Sensorsystem, insbesondere für ein Kraftfahrzeug, angegeben. Das Sensorsystem weist eine Detektoreinheit auf, die dazu eingerichtet ist, von einem Objekt in einer Umgebung des Sensorsystems reflektiertes Licht zu erfassen und basierend auf dem erfassten Licht ein Sensorsignal zu erzeugen. Das Sensorsystem weist eine Recheneinheit auf, die dazu eingerichtet ist, eine erste Pulsweite eines Signalpulses des Sensorsignals zu bestimmen, wobei die erste Pulsweite durch einen vorgegebenen ersten Grenzwert für eine Amplitude des Sensorsignals festgelegt ist. Die Recheneinheit ist dazu eingerichtet, eine zweite Pulsweite des Signalpulses zu bestimmen, wobei die zweite Pulsweite durch einen vorgegebenen zweiten Grenzwert für die Amplitude des Sensorsignals festgelegt ist. Die Recheneinheit ist dazu eingerichtet, wenigstens eine Eigenschaft des Objekts abhängig von der ersten Pulsweite und abhängig von der zweiten Pulsweite zu bestimmen.

Insbesondere weist das aktive optische Sensorsystem eine Emittereinheit auf, die dazu eingerichtet ist, Licht in Richtung des Objekts zu emittieren und die Detektoreinheit ist dazu eingerichtet, von dem Objekt reflektierte Anteile des emittierten Lichts zu erfassen und basierend darauf das Sensorsignal zu erzeugen.

Weitere Ausführungsformen des aktiven optischen Sensorsystems nach dem verbesserten Konzept folgen direkt aus den verschiedenen Ausgestaltungsformen des Verfahrens zur Objekterkennung nach dem verbesserten Konzept und umgekehrt. Insbesondere kann ein aktives optisches Sensorsystem nach dem verbesserten Konzept dazu eingerichtet oder programmiert sein, ein Verfahren nach dem verbesserten Konzept durchzuführen oder es führt ein solches Verfahren durch.

Gemäß dem verbesserten Konzept wird auch ein elektronisches Fahrzeugführungssystem angegeben, das ein aktives optisches Sensorsystem nach dem verbesserten Konzept aufweist. Das Fahrzeugführungssystem weist außerdem ein Steuergerät auf, das dazu eingerichtet ist, abhängig von der wenigstens einen Eigenschaft des Objekts wenigstens ein Steuersignal zu erzeugen, um das Kraftfahrzeug wenigstens teilweise automatisch zu steuern.

Das Steuergerät kann dabei beispielsweise die Recheneinheit des aktiven optischen Sensorsystems enthalten.

Gemäß dem verbesserten Konzept wird auch ein Kraftfahrzeug mit einem elektronischen Fahrzeugführungssystem nach dem verbesserten Konzept oder mit einem aktiven optischen Sensorsystem nach dem verbesserten Konzept angegeben.

Gemäß dem verbesserten Konzept wird ein erstes Computerprogramm mit ersten Befehlen angegeben. Bei Ausführung der ersten Befehle beziehungsweise des ersten Computerprogramms durch ein aktives optisches Sensorsystem nach dem verbesserten Konzept veranlassen die ersten Befehle das Sensorsystem dazu, ein Verfahren zur Objekterkennung nach dem verbesserten Konzept durchzuführen.

Gemäß dem verbesserten Konzept wird auch ein zweites Computerprogramm mit zweiten Befehlen angegeben. Bei Ausführung der zweiten Befehle durch ein elektronisches Fahrzeugführungssystem nach dem verbesserten Konzept beziehungsweise bei Ausführung des zweiten Computerprogramms durch das Fahrzeugführungssystem, veranlassen die zweiten Befehle das Fahrzeugführungssystem dazu, ein Verfahren zur wenigstens teilweise automatischen Steuerung eines Kraftfahrzeugs nach dem verbesserten Konzept durchzuführen.

Gemäß dem verbesserten Konzept wird auch ein computerlesbares Speichermedium angegeben, auf dem ein erstes Computerprogramm nach dem verbesserten Konzept und/oder ein zweites Computerprogramm nach dem verbesserten Konzept gespeichert ist.

Die Computerprogramme nach dem verbesserten Konzept sowie das computerlesbare Speichermedium können als jeweilige Computerprogrammprodukte mit den entsprechenden ersten und/oder zweiten Befehlen aufgefasst werden.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als erfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von denen abweichen.

In den Figuren zeigen:
- Fig. 1: eine schematische Darstellung eines Kraftfahrzeugs mit einer beispielhaften Ausführungsform eines elektronischen Fahrzeugführungssystems nach dem verbesserten Konzept;
- Fig. 2: eine schematische Darstellung von Sensorsignalen einer Detektoreinheit einer beispielhaften Ausführungsform eines aktiven optischen Sensorsystems nach dem verbesserten Konzept;
- Fig. 3: eine schematische Darstellung weiterer Sensorsignale einer Detektoreinheit einer weiteren beispielhaften Ausführungsform eines aktiven optischen Sensorsystems nach dem verbesserten Konzept;
- Fig. 4: eine schematische Darstellung weiterer Sensorsignale einer Detektoreinheit einer weiteren beispielhaften Ausführungsform eines aktiven optischen Sensorsystems nach dem verbesserten Konzept;
- Fig. 5: eine schematische Darstellung einer Kameraaufnahme und einer Punktwolke erzeugt durch eine weitere beispielhafte Ausführungsform eines aktiven optischen Sensorsystems nach dem verbesserten Konzept;
- Fig. 6: eine schematische Darstellung einer Kameraaufnahme und einer Punktwolke erzeugt durch eine weitere beispielhafte Ausführungsform eines aktiven optischen Sensorsystems nach dem verbesserten Konzept; und
- Fig. 7: eine schematische Darstellung einer Kameraaufnahme und einer Punktwolke erzeugt durch eine weitere beispielhafte Ausführungsform eines aktiven optischen Sensorsystems nach dem verbesserten Konzept.

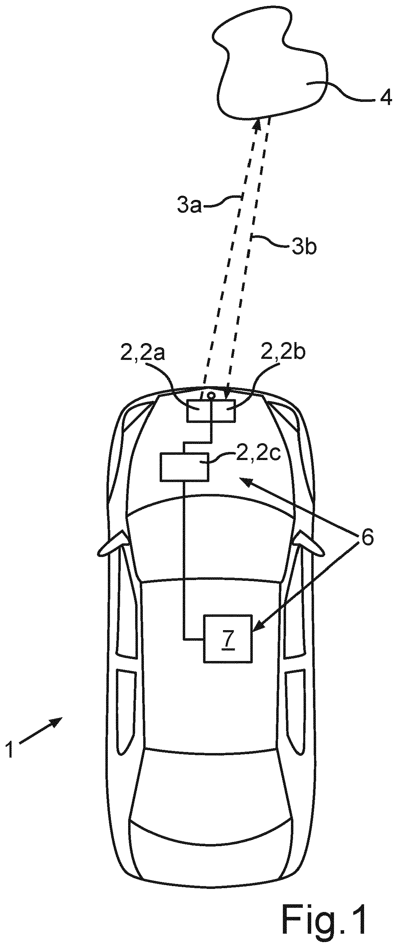

In Fig. 1 ist ein Kraftfahrzeug 1 dargestellt, das ein elektronisches Fahrzeugführungssystem 6 nach dem verbesserten Konzept aufweist.

Das elektronische Fahrzeugführungssystem 6 weist insbesondere ein aktives optisches Sensorsystem 2 nach dem verbesserten Konzept auf. Optional kann das Fahrzeugführungssystem 6 auch ein Steuergerät 7 aufweisen.

Das aktive optische Sensorsystem 2 weist eine Emittereinheit 2a auf, die beispielsweise einen Infrarotlaser enthält. Des Weiteren weist das Sensorsystem 2 eine Detektoreinheit 2b auf, die beispielsweise einen oder mehrere optische Detektoren, wie zum Beispiel APDs, enthält.

Das Sensorsystem 2 weist außerdem eine Recheneinheit 2c auf. Im Folgenden beschriebene Funktionen der Recheneinheit 2c können in verschiedenen Ausgestaltungsformen auch von dem Steuergerät 7 übernommen werden oder umgekehrt.

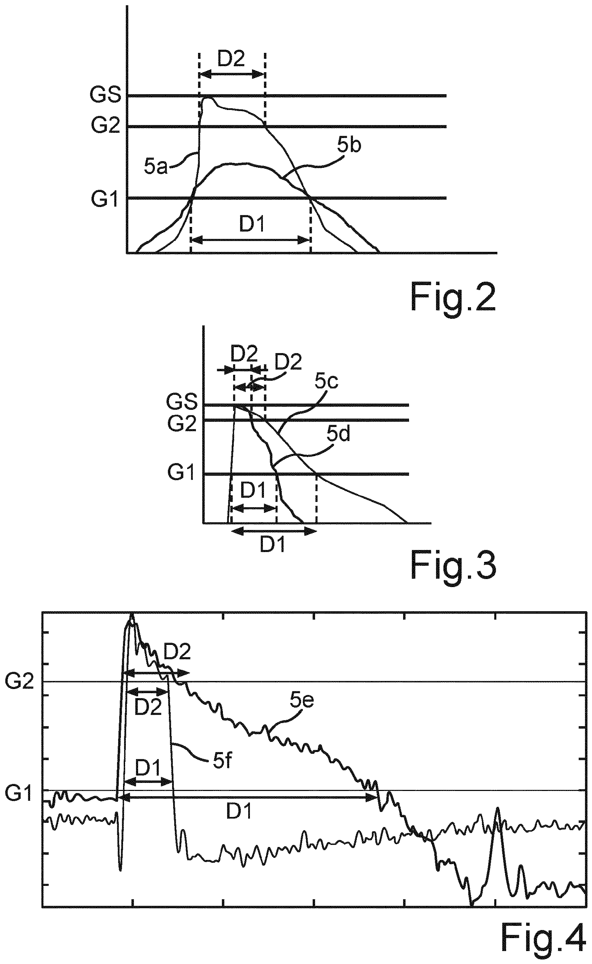

Die Emittereinheit 2a emittiert Laserpulse 3a in die Umgebung des Kraftfahrzeugs 1, wo sie von einem Objekt 4 teilweise reflektiert werden und als reflektierte Pulse 3b wenigstens zum Teil in Richtung des Sensorsystems 2 und insbesondere der Detektoreinheit 2b zurückreflektiert werden. Die Detektoreinheit 2b, insbesondere die optischen Detektoren der Detektoreinheit 2b, erfassen die reflektierten Anteile 3b und erzeugen basierend darauf ein zeitabhängiges Sensorsignal, das eine Amplitude aufweist, die proportional ist zur Strahlungsintensität oder Strahlungsleistung des erfassten Lichts 3b. In den Fig. 2 bis Fig. 4 sind entsprechende Beispiele für verschiedene Signalpulse dargestellt.

Die Recheneinheit 2c bestimmt ein erstes Zeitintervall, während dem das Sensorsignal 5a, 5b, 5c, 5d, 5e, 5f einen ersten Grenzwert G1 überschreitet. Dieses erste Zeitintervall entspricht dann der ersten Pulsweite D1 des entsprechenden Signalpulses. In derselben Weise bestimmt die Recheneinheit 2c eine zweite Pulsweite D2 durch entsprechenden Vergleich des Sensorsignals Sensorsignal 5a, 5b, 5c, 5d, 5e, 5f mit einem zweiten Grenzwert G2, der größer ist als der erste Grenzwert G1.

Die Recheneinheit 2c oder das Steuergerät 7 kann dann basierend auf der ersten Pulsweite D1 und der zweiten Pulsweite D2 eine Eigenschaft des Objekts 4 bestimmen, beispielsweise eine Reflektivität oder eine Ausdehnung des Objekts 4.

Insbesondere kann die Recheneinheit 2c oder das Steuergerät 7 das Objekt 4 abhängig von der Eigenschaft beziehungsweise von den Pulsweiten D1, D2 klassifizieren.

Basierend auf einem Ergebnis der Klassifizierung beziehungsweise basierend auf der Eigenschaft des Objekts erzeugt das Steuergerät 7 dann beispielsweise Steuersignale, um das Kraftfahrzeug 1 wenigstens teilweise automatisch zu steuern.

In Fig. 2 sind zwei beispielhafte Sensorsignale 5a, 5b dargestellt, die näherungsweise dieselbe erste Pulsweite D1 aufweisen. Während das Sensorsignal 5a jedoch einen vergleichsweise steilen Puls enthält, verläuft der Puls des Sensorsignals 5b flacher. Diese unterschiedlichen Pulsformen spiegeln sich in unterschiedlichen zweiten Pulsweiten D2 wider. Insbesondere ist die zweite Pulsweite D2 für das Sensorsignal 5a größer als Null, mit anderen Worten übersteigt der Signalpuls des Sensorsignals 5a den zweiten Grenzwert G2, während dies für den Signalpuls des Sensorsignals 5b nicht der Fall ist, weshalb die entsprechende zweite Pulsweite hier gleich Null ist.

Beispielsweise kann das Sensorsignal 5a Licht entsprechen, das von einem Objekt mit einer relativ geringen Ausdehnung reflektiert wurde, das sich auf einer Fahrbahnoberfläche befindet. Die Pulsform des Sensorsignals 5b dagegen ist beispielsweise typisch für eine Fahrbahnmarkierung auf der Fahrbahnoberfläche. Entsprechend können kleine Objekte von Fahrbahnmarkierungen aufgrund der unterschiedlichen Pulsweiten D1, D2 voneinander unterschieden werden, was nicht der Fall wäre, würde man sich nur auf die erste Pulsweite D1 verlassen.

Verwendet man beispielsweise APDs als optische Detektoren, kann ein Sättigungsgrenzwert GS beispielsweise in der Größenordnung einiger 100 mV liegen, beispielsweise zwischen 100 mV und 1000 mV.

In der beschriebenen Weise können beispielsweise Bodenpunkte von "echten" Zielen unterschieden werden.

In Fig. 3 sind zwei weitere beispielhafte Sensorsignale 5c, 5d gezeigt, die beide dem Fall der Sättigung entsprechen, also mit anderen Worten Signalpulse aufweisen, die den Sättigungsgrenzwert GS erreichen.

Dementsprechend sind für beide Signalpulse der Sensorsignale 5c, 5d sowohl die erste Pulsweite D1 als auch die zweite Pulsweite D2 größer als Null.

Besonders in solchen Fällen, in denen davon ausgegangen werden kann, dass alle Signalpulse den Sättigungsgrenzwert GS erreichen, sind bereits zwei Grenzwerte G1, G2 und entsprechend zwei Pulsweiten D1, D2 geeignet, die Pulsform der Sensorsignale 5c, 5d ausreichend genau wiederzugeben.

Sollte die Detektoreinheit 2b derart betrieben werden, dass die Sättigung der Pulse nicht notwendigerweise sichergestellt ist, kann es vorteilhaft sein, zwischen den beiden Grenzwerten G1, G2 weitere Grenzwerte einzuführen und entsprechende weitere Pulsweiten zu bestimmen, um mehr Informationen über die Pulsform zu erhalten.

In Fig. 4 ist ein weiteres Beispiel zweier weiterer Sensorsignale 5e, 5f gezeigt. Auch hier kann beispielsweise das Sensorsignal 5e Reflexionen von einer Fahrbahnmarkierung entsprechen, während das Sensorsignal 5f Reflexionen von einem kleinen Objekt auf der Oberfläche der Fahrbahn entsprechen kann.

Demzufolge sind hier beide zweite Pulsweiten D2 größer als Null und näherungsweise gleich oder jedenfalls ähnlich. Die ersten Pulsweiten D1 unterscheiden sich zwischen den Sensorsignalen 5e, 5f jedoch signifikant. In dieser Weise können dann wiederum Rückschlüsse auf die Signalpulsform beziehungsweise dann auch auf die Art des Objekts geschlossen werden.

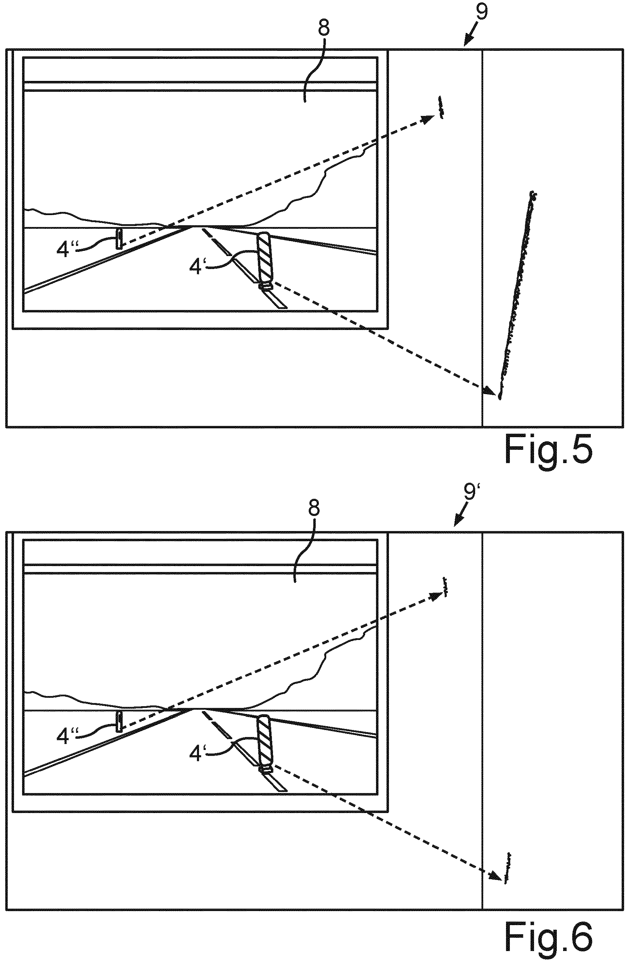

In Fig. 5 ist schematisch eine Situation aus Sicht eines Kraftfahrzeugs 1 dargestellt. Ein Kamerabild 8 zeigt einen reflektierenden Pfosten 4', der auf einer Fahrbahn für das Kraftfahrzeug 1 angeordnet ist, sowie einen Leitpfosten 4", der neben der Fahrbahn angeordnet ist. Darüber hinaus sind entsprechende Punktwolken 9 des Sensorsystems 2 dargestellt. Punkte der Punktwolke sind dabei gemäß ihrer Position in der Umgebung des Kraftfahrzeugs positioniert und die Punktwolke 9 zeigt dabei all diejenigen Punkte an, die zu einem Sensorsignal geführt haben, deren Maximalamplitude den ersten Grenzwert G1 übersch reitet.

In Fig. 6 ist dasselbe Kamerabild 8 mit einer weiteren Punktwolke 9' dargestellt. Die weitere Punktwolke 9' entspricht dabei weitgehend der Punktwolke 9 mit dem Unterschied, dass nur diejenigen Punkte gezeigt sind, deren entsprechendes Sensorsignal den zweiten Grenzwert G2 überschreitet. Wie leicht zu erkennen ist, ist der Unterschied in den Punktwolken 9, 9' für die Leitpfosten 4" relativ gering, während für den reflektierenden Pfosten 4' ein deutlicher Unterschied gegeben ist.

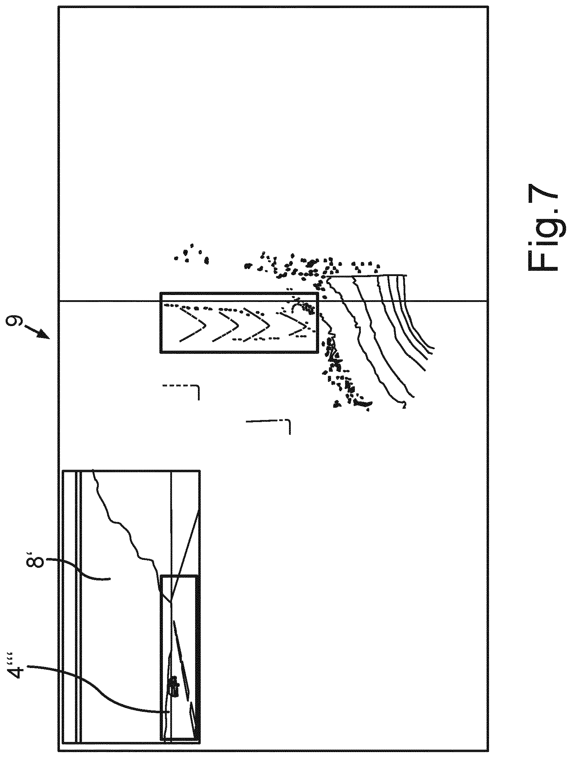

In Fig. 7 ist ein weiteres Beispiel aus Sicht des Kraftfahrzeugs 1 dargestellt. Hier ist ein weiteres Kamerabild 8' gezeigt, in dem V-förmige Fahrbahnmarkierungen 4‴ sichtbar sind. Die entsprechende Punktwolke 9" zeigt die entsprechenden Punkte. Die Reflektivität der Fahrbahnmarkierungen 4‴ ist in dem Fall hoch genug, dass die entsprechenden Sensorsignale beide Grenzwerte G1, G2 überschreiten. In diesem Fall ist jedoch, wie bezüglich der Fig. 2 bis Fig. 4 ausgeführt, der Unterschied zwischen erster Pulsweite D1 und zweiter Pulsweite D2 stärker ausgeprägt als dies beispielsweise bei sonstigen Objekten auf der Fahrbahnoberfläche der Fall wäre.

Wie beschrieben, wird durch das verbesserte Konzept eine Möglichkeit angegeben, Objekterkennung durch ein aktives optisches Sensorsystem mit höherer Zuverlässigkeit und höherer Genauigkeit durchzuführen. Entsprechend können Funktionen zur automatischen oder teilweise automatischen Fahrzeugführung ebenfalls mit höherer Genauigkeit beziehungsweise Zuverlässigkeit und Sicherheit durchgeführt werden.

## Patentansprüche

1. Verfahren zur Objekterkennung durch ein aktives optisches Sensorsystem (2), wobei
- mittels einer Detektoreinheit (2b) des Sensorsystems (2) von einem Objekt (4) in einer Umgebung des Sensorsystems (2) reflektiertes Licht (3b) erfasst wird und basierend auf dem erfassten Licht (3b) ein Sensorsignal (5a, 5b, 5c, 5d, 5e, 5f) erzeugt wird;
- mittels einer Recheneinheit (2c) eine erste Pulsweite (D1) eines Signalpulses des Sensorsignals (5a, 5b, 5c, 5d, 5e, 5f) bestimmt wird, wobei die erste Pulsweite (D1) durch einen vorgegebenen ersten Grenzwert (G1) für eine Amplitude des Sensorsignals (5a, 5b, 5c, 5d, 5e, 5f) festgelegt ist;
- mittels der Recheneinheit (2c) eine zweite Pulsweite (D2) des Signalpulses bestimmt wird, wobei die zweite Pulsweite (D2) durch einen vorgegebenen zweiten Grenzwert (G2) für die Amplitude des Sensorsignals (5a, 5b, 5c, 5d, 5e, 5f) festgelegt ist, wobei der erste Grenzwert (G1) und der zweite Grenzwert (G2) verschieden sind; **dadurch gekennzeichnet, dass**
- mittels der Recheneinheit (2c) wenigstens eine Eigenschaft des Objekts (4) zur Klassifizierung des Objekts (4) abhängig von der ersten Pulsweite (D1) und der zweiten Pulsweite (D2) bestimmt wird, wobei die Eigenschaft des Objekts (4) abhängig von einer Differenz zwischen der ersten Pulsweite (D1) und der zweiten Pulsweite (D2) bestimmt wird.

2. Verfahren nach Anspruch 1,
**dadurch gekennzeichnet, dass**
die Eigenschaft des Objekts (4) abhängig von einem Verhältnis der ersten Pulsweite (D1) zu der zweiten Pulsweite (D2) bestimmt wird.

3. Verfahren nach Anspruch 1 oder 2,
**dadurch gekennzeichnet, dass**
die wenigstens eine Eigenschaft eine Reflektivität des Objekts (4) enthält.

4. Verfahren nach einem der vorhergehenden Ansprüche,
**dadurch gekennzeichnet, dass**
die wenigstens eine Eigenschaft eine Ausdehnung des Objekts (4) in einer radialen Richtung bezüglich des Sensorsystems (2) enthält.

5. Verfahren nach einem der vorhergehenden Ansprüche,
**dadurch gekennzeichnet, dass**
mittels der Recheneinheit (2c) eine Klassifizierung des Objekts (4) abhängig von der ersten und der zweiten Pulsweite (D1, D2) durchgeführt wird.

6. Verfahren nach einem der vorhergehende Ansprüche,
**dadurch gekennzeichnet, dass**
mittels der Recheneinheit (2c) basierend auf der ersten und der zweiten Pulsweite (D1, D2) festgestellt wird, ob es sich bei dem Objekt (4) um einen Teil einer Fahrbahn für ein Kraftfahrzeug (1) oder um eine Fahrbahnmarkierung (4‴) der Fahrbahn handelt.

7. Verfahren nach einem der vorhergehende Ansprüche,
**dadurch gekennzeichnet, dass**
- mittels der Recheneinheit (2c) wenigstens eine weitere Pulsweite des Signalpulses bestimmt wird, wobei jede weitere Pulsweite der wenigstens einen weiteren Pulsweite durch einen zugehörigen vorgegebenen weiteren Grenzwert für die Amplitude des Sensorsignals (5a, 5b, 5c, 5d, 5e, 5f) festgelegt ist; und
- mittels der Recheneinheit (2c) die wenigstens eine Eigenschaft des Objekts (4) abhängig von der wenigstens einen weiteren Pulsweite bestimmt wird.

8. Verfahren nach einem der vorhergehende Ansprüche,
**dadurch gekennzeichnet, dass**
- der zweite Grenzwert (G2) größer ist als der erste Grenzwert (G1) und der erste Grenzwert (G1) größer ist als ein vorgegebenes Rauschniveau der Detektoreinheit (2b); und/oder
- der zweite Grenzwert (G2) größer ist als der erste Grenzwert (G1) und der zweite Grenzwert (G2) größer ist als ein vorgegebener Sättigungsgrenzwert (GS) der Detektoreinheit.

9. Verfahren zur wenigstens teilweise automatischen Steuerung eines Kraftfahrzeugs (1),
**dadurch gekennzeichnet, dass**
- wenigstens eine Eigenschaft eines Objekts (4) in einer Umgebung des Kraftfahrzeugs (1) mittels eines Verfahrens zur Objekterkennung nach einem der vorhergehenden Ansprüche bestimmt wird; und
- das Kraftfahrzeug (1) abhängig von der wenigstens einen Eigenschaft des Objekts (4) wenigstens teilweise automatisch gesteuert wird.

10. Verfahren nach Anspruch 9,
**dadurch gekennzeichnet, dass**
- die wenigstens eine Eigenschaft eines Objekts (4) mittels eines Verfahrens zur Objekterkennung nach Anspruch 5 bestimmt wird; und
- das Kraftfahrzeug (1) abhängig von einem Ergebnis der Klassifizierung wenigstens teilweise automatisch gesteuert wird.

11. Aktives optisches Sensorsystem (2), aufweisend
- eine Detektoreinheit (2b), die dazu eingerichtet ist, von einem Objekt (2c) in einer Umgebung des Sensorsystems (2) reflektiertes Licht (3b) zu erfassen und basierend auf dem erfassten Licht (3b) ein Sensorsignal (5a, 5b, 5c, 5d, 5e, 5f) zu erzeugen; und
- eine Recheneinheit (2c), die dazu eingerichtet ist, eine erste Pulsweite (D1) eines Signalpulses des Sensorsignals (5a, 5b, 5c, 5d, 5e, 5f) zu bestimmen, wobei die erste Pulsweite (D1) durch einen vorgegebenen ersten Grenzwert (G1) für eine Amplitude des Sensorsignals (5a, 5b, 5c, 5d, 5e, 5f) festgelegt ist;
- die Recheneinheit (2c) dazu eingerichtet ist, eine zweite Pulsweite (D2) des Signalpulses zu bestimmen, wobei die zweite Pulsweite (D2) durch einen vorgegebenen zweiten Grenzwert (G2) für die Amplitude des Sensorsignals (5a, 5b, 5c, 5d, 5e, 5f) festgelegt ist, wobei der erste Grenzwert (G1) und der zweite Grenzwert (G2) verschieden sind; **dadurch gekennzeichnet, dass**
- die Recheneinheit (2c) dazu eingerichtet ist, wenigstens eine Eigenschaft des Objekts (4) zur Klassifizierung des Objekts (4) abhängig von der ersten Pulsweite (D1) und der zweiten Pulsweite (D2) zu bestimmen, wobei die Eigenschaft des Objekts (4) abhängig von einer Differenz zwischen der ersten Pulsweite (D1) und der zweiten Pulsweite (D2) bestimmt wird.

12. Elektronisches Fahrzeugführungssystem für ein Kraftfahrzeug (1),
**dadurch gekennzeichnet, dass**
- das Fahrzeugführungssystem (6) ein aktives optisches Sensorsystem (2) nach Anspruch 11 aufweist;
- das Fahrzeugführungssystem (6) ein Steuergerät (7) aufweist, das dazu eingerichtet ist, abhängig von der wenigstens einen Eigenschaft des Objekts (4) wenigstens ein Steuersignal zu erzeugen, um das Kraftfahrzeug (1) wenigstens teilweise automatisch zu steuern.

13. Computerprogrammprodukt mit Befehlen, die bei Ausführung durch ein aktives optisches Sensorsystem (2) nach Anspruch 11, das Sensorsystem (2) dazu veranlassen, ein Verfahren nach einem der Ansprüche 1 bis 8 durchzuführen.

14. Computerprogrammprodukt mit Befehlen, die bei Ausführung durch ein elektronisches Fahrzeugführungssystem (6) nach Anspruch 12, das Fahrzeugführungssystem (6) dazu veranlassen, ein Verfahren nach einem der Ansprüche 9 oder 10 durchzuführen.

## Claims

1. Method for object recognition using an active optical sensor system (2), wherein
- light (3b) reflected by an object (4) in an environment of the sensor system (2) is registered by means of a detector unit (2b) of the sensor system (2) and a sensor signal (5a, 5b, 5c, 5d, 5e, 5f) is generated on the basis of the registered light (3b);
- a first pulse width (D1) of a signal pulse of the sensor signal (5a, 5b, 5c, 5d, 5e, 5f) is determined by means of a computer unit (2c), the first pulse width (D1) being established by a predetermined first limit value (G1) for an amplitude of the sensor signal (5a, 5b, 5c, 5d, 5e, 5f);
- a second pulse width (D2) of the signal pulse is determined by means of the computer unit (2c), the second pulse width (D2) being established by a predetermined second limit value (G2) for the amplitude of the sensor signal (5a, 5b, 5c, 5d, 5e, 5f), the first limit value (G1) and the second limit value (G2) being different; **characterized in that**
- at least one property of the object (4) is determined by means of the computer unit (2c) in order to classify the object (4) in accordance with the first pulse width (D1) and the second pulse width (D2), the property of the object (4) being determined in accordance with a difference between the first pulse width (D1) and the second pulse width (D2).

2. Method according to Claim 1,
**characterized in that**
the property of the object (4) is determined in accordance with a ratio of the first pulse width (D1) to the second pulse width (D2).

3. Method according to Claim 1 or 2,
**characterized in that**
the at least one property contains a reflectivity of the object (4).

4. Method according to one of the preceding claims,
**characterized in that**
the at least one property contains an extent of the object (4) in a radial direction with respect to the sensor system (2).

5. Method according to one of the preceding claims,
**characterized in that**
a classification of the object (4) is carried out by means of the computer unit (2c) in accordance with the first and the second pulse width (D1, D2).

6. Method according to one of the preceding claims,
**characterized in that**
whether the object (4) is part of a roadway for a motor vehicle (1) or is a roadway marking (4‴) of the roadway is established by means of the computer unit (2c) on the basis of the first and the second pulse width (D1, D2).

7. Method according to one of the preceding claims, **characterized in that**
- at least one further pulse width of the signal pulse is determined by means of the computer unit (2c), each further pulse width of the at least one further pulse width being established by an associated predetermined further limit value for the amplitude of the sensor signal (5a, 5b, 5c, 5d, 5e, 5f); and
- the at least one property of the object (4) is determined by means of the computer unit (2c) in accordance with the at least one further pulse width.

8. Method according to one of the preceding claims, **characterized in that**
- the second limit value (G2) is greater than the first limit value (G1) and the first limit value (G1) is greater than a predetermined noise level of the detector unit (2b); and/or
- the second limit value (G2) is greater than the first limit value (G1) and the second limit value (G2) is greater than a predetermined saturation limit value (GS) of the detector unit.

9. Method for the at least partially automatic control of a motor vehicle (1),
**characterized in that**
- at least one property of an object (4) in an environment of the motor vehicle (1) is determined by means of a method for object recognition according to one of the preceding claims; and
- the motor vehicle (1) is controlled at least partially automatically in accordance with the at least one property of the object (4).

10. Method according to Claim 9,
**characterized in that**
- the at least one property of an object (4) is determined by means of a method for object recognition according to Claim 5; and
- the motor vehicle (1) is controlled at least partially automatically in accordance with a result of the classification.

11. Active optical sensor system (2), having
- a detector unit (2b), which is configured to register light (3b) reflected by an object (2c) in an environment of the sensor system (2) and to generate a sensor signal (5a, 5b, 5c, 5d, 5e, 5f) on the basis of the registered light (3b); and
- a computer unit (2c), which is configured to determine a first pulse width (D1) of a signal pulse of the sensor signal (5a, 5b, 5c, 5d, 5e, 5f), the first pulse width (D1) being established by a predetermined first limit value (G1) for an amplitude of the sensor signal (5a, 5b, 5c, 5d, 5e, 5f);
- the computer unit (2c) is configured to determine a second pulse width (D2) of the signal pulse, the second pulse width (D2) being established by a predetermined second limit value (G2) for the amplitude of the sensor signal (5a, 5b, 5c, 5d, 5e, 5f), the first limit value (G1) and the second limit value (G2) being different; **characterized in that**
- the computer unit (2c) is configured to determine at least one property of the object (4) in order to classify the object (4) in accordance with the first pulse width (D1) and the second pulse width (D2), the property of the object (4) being determined in accordance with a difference between the first pulse width (D1) and the second pulse width (D2).

12. Electronic vehicle guidance system for a motor vehicle (1),
**characterized in that**
- the vehicle guidance system (6) has an active optical sensor system (2) according to Claim 11;
- the vehicle guidance system (6) has a control device (7), which is configured to generate at least one control signal in accordance with the at least one property of the object (4), in order to control the motor vehicle (1) at least partially automatically.

13. Computer program having instructions which, when executed by an active optical sensor system (2) according to Claim 11, cause the sensor system (2) to carry out a method according to one of Claims 1 to 8.

14. Computer program having instructions which, when executed by an electronic vehicle guidance system (6) according to Claim 12, cause the vehicle guidance system (6) to carry out a method according to either of Claims 9 and 10.

## Revendications

1. Procédé de reconnaissance d'objet par un système capteur optique actif (2),
- la lumière (3b) réfléchie par un objet (4) dans un environnement du système capteur (2) étant capturée au moyen d'une unité de détection (2b) du système capteur (2), et un signal de capteur (5a, 5b, 5c, 5d, 5e, 5f) étant généré sur la base de la lumière (3b) capturée ;
- une première largeur d'impulsion (D1) d'une impulsion de signal du signal de capteur (5a, 5b, 5c, 5d, 5e, 5f) étant déterminée au moyen d'une unité de calcul (2c), la première largeur d'impulsion (D1) étant fixée par une première valeur limite (G1) prédéfinie pour une amplitude du signal de capteur (5a, 5b, 5c, 5d, 5e, 5f) ;
- une deuxième largeur d'impulsion (D2) de l'impulsion de signal étant déterminée au moyen de l'unité de calcul (2c), la deuxième largeur d'impulsion (D2) étant fixée par une deuxième valeur limite (G2) prédéfinie pour l'amplitude du signal de capteur (5a, 5b, 5c, 5d, 5e, 5f), la première valeur limite (G1) et la deuxième valeur limite (G2) étant différentes ; **caractérisé en ce que**
- au moyen de l'unité de calcul (2c), au moins une propriété de l'objet (4) est déterminée en vue de la classification de l'objet (4) en fonction de la première largeur d'impulsion (D1) et de la deuxième largeur d'impulsion (D2), la propriété de l'objet (4) étant déterminée en fonction d'une différence entre la première largeur d'impulsion (D1) et la deuxième largeur d'impulsion (D2).

2. Procédé selon la revendication 1,
**caractérisé en ce que**
la propriété de l'objet (4) est déterminée en fonction d'un rapport entre la première largeur d'impulsion (D1) et la deuxième largeur d'impulsion (D2).

3. Procédé selon la revendication 1 ou 2,
**caractérisé en ce que**
l'au moins une propriété comprend une réflectivité de l'objet (4).

4. Procédé selon l'une des revendications précédentes,
**caractérisé en ce que**
l'au moins une propriété comprend une extension de l'objet (4) dans une direction radiale par rapport au système capteur (2).

5. Procédé selon l'une des revendications précédentes,
**caractérisé en ce que**
une classification de l'objet (4) est effectuée au moyen de l'unité de calcul (2c) en fonction de la première et de la deuxième largeur d'impulsion (D1, D2).

6. Procédé selon l'une des revendications précédentes,
**caractérisé en ce que**
sur la base de la première et de la deuxième largeur d'impulsion (D1, D2), il est constaté au moyen de l'unité de calcul (2c) si l'objet (4) est une partie d'une voie de circulation pour un véhicule automobile (1) ou un marquage de voie de circulation (4''') de la voie de circulation.

7. Procédé selon l'une des revendications précédentes,
**caractérisé en ce que**
- au moins une largeur d'impulsion supplémentaire de l'impulsion de signal est déterminée au moyen de l'unité de calcul (2c), chaque largeur d'impulsion supplémentaire de l'au moins une largeur d'impulsion supplémentaire étant fixée par une valeur limite supplémentaire prédéfinie correspondante pour l'amplitude du signal de capteur (5a, 5b, 5c, 5d, 5e, 5f) ; et
- l'au moins une propriété de l'objet (4) est déterminée au moyen de l'unité de calcul (2c) en fonction de l'au moins une largeur d'impulsion supplémentaire.

8. Procédé selon l'une des revendications précédentes,
**caractérisé en ce que**
- la deuxième valeur limite (G2) est supérieure à la première valeur limite (G1) et la première valeur limite (G1) est supérieure à un niveau de bruit prédéfini de l'unité de détection (2b) ; et/ou
- la deuxième valeur limite (G2) est supérieure à la première valeur limite (G1) et la deuxième valeur limite (G2) est supérieure à une valeur limite de saturation (GS) prédéfinie de l'unité de détection.

9. Procédé de commande au moins partiellement automatique d'un véhicule automobile (1),
**caractérisé en ce que**
- au moins une propriété d'un objet (4) dans un environnement du véhicule automobile (1) est déterminée au moyen d'un procédé de reconnaissance d'objet selon l'une des revendications précédentes ; et
- le véhicule automobile (1) est commandé au moins partiellement automatiquement en fonction de l'au moins une propriété de l'objet (4).

10. Procédé selon la revendication 9,
**caractérisé en ce que**
- l'au moins une propriété d'un objet (4) est déterminée au moyen d'un procédé de reconnaissance d'objet selon la revendication 5 ; et
- le véhicule automobile (1) est commandé au moins partiellement automatiquement en fonction d'un résultat de la classification.

11. Système capteur optique actif (2), comprenant
- une unité de détection (2b), qui est conçue pour capturer la lumière (3b) réfléchie par un objet (2c) dans un environnement du système capteur (2) et pour générer un signal de capteur (5a, 5b, 5c, 5d, 5e, 5f) sur la base de la lumière (3b) capturée ; et
- une unité de calcul (2c), qui est conçue pour déterminer une première largeur d'impulsion (D1) d'une impulsion de signal du signal de capteur (5a, 5b, 5c, 5d, 5e, 5f), la première largeur d'impulsion (D1) étant fixée par une première valeur limite (G1) prédéfinie pour une amplitude du signal de capteur (5a, 5b, 5c, 5d, 5e, 5f) ;
- l'unité de calcul (2c) est conçue pour déterminer une deuxième largeur d'impulsion (D2) de l'impulsion de signal, la deuxième largeur d'impulsion (D2) étant fixée par une deuxième valeur limite (G2) prédéfinie pour l'amplitude du signal de capteur (5a, 5b, 5c, 5d, 5e, 5f), la première valeur limite (G1) et la deuxième valeur limite (G2) étant différentes ; **caractérisé en ce que**
- l'unité de calcul (2c) est conçue pour déterminer au moins une propriété de l'objet (4) en vue de la classification de l'objet (4) en fonction de la première largeur d'impulsion (D1) et de la deuxième largeur d'impulsion (D2), la propriété de l'objet (4) étant déterminée en fonction d'une différence entre la première largeur d'impulsion (D1) et la deuxième largeur d'impulsion (D2).

12. Système électronique de guidage de véhicule pour un véhicule automobile (1),
**caractérisé en ce que**
- le système de guidage de véhicule (6) possède un système capteur (2) optique actif selon la revendication 11 ;
- le système de guidage de véhicule (6) possède un contrôleur (7), qui est conçu pour générer au moins un signal de commande en fonction de l'au moins une propriété de l'objet (4), afin de commander le véhicule automobile (1) au moins partiellement automatiquement.

13. Produit de programme informatique comprenant des instructions qui, lorsqu'elles sont exécutées par un système capteur (2) optique actif selon la revendication 11, amènent le système capteur (2) à mettre en œuvre un procédé selon l'une des revendications 1 à 8.

14. Produit de programme informatique comprenant des instructions qui, lorsqu'elles sont exécutées par un système électronique de guidage de véhicule (6) selon la revendication 12, amènent le système de guidage de véhicule (6) à mettre en œuvre un procédé selon l'une des revendications 9 ou 10.
